# EUROPÄISCHE PATENTSCHRIFT

(11) **EP 4 628 696 B1**
(45) Veröffentlichungstag und Bekanntmachung des Hinweises auf die Patenterteilung: **20.05.2026**
(21) Anmeldenummer: 24168091.7
(22) Anmeldetag: 02.04.2024
(51) Int. Cl.: E06B 3/58, F16B 5/06, F16B 21/06, F16B 21/08, E06B 3/62

(54) **SCHEIBENEINFASSPROFIL**
PANE MOUNTING PROFILE
PROFILÉ D'ENCASTREMENT DE VITRE

(43) Veröffentlichungstag der Anmeldung: 08.10.2025
(73) Patentinhaber: Alcom International GmbH, 72770 Reutlingen (DE)
(72) Erfinder: Möller, Olaf, 72770 Reutlingen (DE)
(74) Vertreter: Christ, Niko

(56) Entgegenhaltungen:
- DE-A1- 102017 005 034
- DE-A1- 102019 000 009

## Beschreibung

Die vorliegende Erfindung betrifft ein Scheibeneinfassprofil zur Verbindung mit einem Nutprofil, umfassend ein Grundelement und ein an diesem über eine Gelenkverbindung angeschlossenes Verschlusselement, wobei das Grundelement eine endständige erste Anlageflanke sowie zwei Spreizflanken zum Eingreifen in eine Nut des Nutprofils aufweist, zwischen denen wenigstens eine Eingriffsöffnung freigehalten ist, in welche wenigstens ein an dem Verschlusselement angeformtes Rastelement eingreifen kann, wenn das Verschlusselement um die Gelenkverbindung geschwenkt und in Anlage mit dem Grundelement gebracht wird, wobei das Verschlusselement an einem der Gelenkverbindung gegenüberliegenden, freien Ende eine elastische Anpresslippe zum Einfassen einer Scheibe zwischen sich und der ersten Anlageflanke aufweist.

Ein solches Scheibeneinfassprofil ist bereits aus der DE 10 2017 005034 A1 vorbekannt. Weiter ist auf die DE 10 2019 000009 A1 zu verweisen.

Nutprofile sind bereits seit Langem bekannt und stellen eine einfache und kostengünstige Möglichkeit dar, Konstruktionen wie Trennwände, Tresen, Leitelemente und dergleichen mehr herzustellen. Dabei kann weitgehend auf eine spezifische Gestaltung der Konstruktionselemente verzichtet werden, vielmehr eignet sich eine solche Vorgehensweise ohne Weiteres dazu, mit vorgefertigten Teilen wertige und anpassbare, dabei aber auch robuste und vor allem wieder zerlegbare und neu zusammensetzbare Konstruktionen zu erstellen.

Hierzu werden Nutprofile miteinander verbunden, indem in die Nuten geeignete Nutensteine eingeführt werden, welche eine Querverbindung mit weiteren Nutprofilen ermöglichen. Die Nutensteine sind verschiebbar, solange sie nicht mit Schrauben festgezogen wurden, es sind zahlreiche unterschiedliche Profile bekannt, die sich für spezifische Anwendungen eignen.

Nicht bekannt ist bislang allerdings eine einfache Möglichkeit, auch Scheiben, insbesondere Glas- aber auch andere Scheiben und Platten mit bekannten Nutprofilen einfach und schnell zu verbinden. Insbesondere bei Glasplatten liegt dies ganz offensichtlich daran, dass eine Verschraubung einer Glasplatte mithilfe eines Nutensteins nicht ohne Weiteres möglich und auch nicht gewünscht ist, da eine direkte Verschraubung teure Bohrungen im Glas erfordern oder ein direktes Übertragen von Stößen gegen das Glas ermöglichen würde.

Vor diesem Hintergrund liegt der vorliegenden Erfindung die Aufgabe zu Grunde, ein leicht zu handhabendes und sowohl einfaches als auch kostengünstiges Scheibeneinfassprofil zu schaffen, mit dem auch Glasscheiben mit Nutprofilen unproblematisch und reversibel verbunden werden können.

Dies gelingt durch ein Scheibeneinfassprofil gemäß den Merkmalen des unabhängigen Anspruchs 1. Sinnvolle Ausgestaltungen eines solchen Scheibeneinfassprofils können den sich anschließenden abhängigen Ansprüchen entnommen werden.

Erfindungsgemäß ist insoweit ein Scheibeneinfassprofil zur Verbindung mit einem Nutprofil vorgesehen, umfassend ein Grundelement und ein an diesem über eine Gelenkverbindung angeschlossenes Verschlusselement, wobei das Grundelement eine endständige erste Anlageflanke sowie zwei Spreizflanken zum Eingreifen in eine Nut des Nutprofils aufweist, zwischen denen wenigstens eine Eingriffsöffnung freigehalten ist, in welche wenigstens ein an dem Verschlusselement angeformtes Rastelement eingreifen kann, wenn das Verschlusselement um die Gelenkverbindung geschwenkt und in Anlage mit dem Grundelement gebracht wird, wobei das Verschlusselement an einem der Gelenkverbindung gegenüberliegenden, freien Ende eine elastische Anpresslippe zum Einfassen einer Scheibe zwischen sich und der ersten Anlageflanke aufweist.

In einer solchen Konstruktion ist es lediglich erforderlich, das Scheibeneinfassprofil mit den Spreizflanken in eine Nut eines Nutprofil einzuclipsen oder auch nur einzuführen. Wird anschließend die zu befestigende Glasscheibe an die erste Anlageflanke angelegt, so kann das Verschlusselement um die Gelenkverbindung herum angeklappt und das Rastelement in die Eingriffsöffnung eingesteckt werden. Dies löst zwei Probleme gleichzeitig: Zum Einen wird das Verschlusselement so in Anlage zu dem Grundelement gehalten und die sich an die Scheibe anschmiegende Anpresslippe bleibt in Position und hält so die Scheibe. Zum Anderen werden so die beiden Abschnitte des Grundelements, die zwischen sich die wenigstens eine Eingriffsöffnung einschließen, auseinandergedrückt, so dass die Spreizelemente sich in einander gegenüberliegende Hinterschneidungen der Nuten des Nutprofils hineindrücken können. Hierdurch wird das Scheibeneinfassprofil in der Nut des Nutprofils gesichert.

Eine Entnahme ist dann möglich, wenn ausgehend von der Anpresslippe das Verschlusselement von dem Grundelement weggezogen wird, so dass das Rastelement aus der Eingriffsöffnung herausgezogen wird. Hierdurch wird die Spannung zwischen den Spreizelementen abgebaut und diese können durch die Öffnung der Nut des Nutprofils wieder entnommen werden.

Erfindungsgemäß ist vorgesehen, dass die Eingriffsöffnung eine durchgehende Öffnung ausbildet und die Spreizflanken über ein Federelement miteinander verbunden sind, wobei das Federelement mit den Spreizflanken und dem Grundelement einen Aufnahmeraum zur Aufnahme des Rastelements ausbildet. Sofern es sich bei der Eingriffsöffnung um eine durchgehende Öffnung handelt, besteht zwischen den beiden Spreizflanken keine Verbindung. Zwar könnte auch so das Scheibeneinfassprofil in der Nut des Nutprofils platziert werden, dies wäre jedoch sehr unhandlich, weil stets zwei unabhängige Teile gehalten und zueinander positioniert werden müssten. Nach einer Montage würde dies hingegen nach außen hin nicht mehr auffallen. Durch die Anbringung des Federelements zwischen den Spreizflanken kann jedoch zwischen den Teilen des Grundelements eine Verbindung hergestellt werden, welche zum Einen eine Variable Positionierung der Spreizflanken erlaubt, so dass sie zum Einführen in die Nut des Nutprofils zusammengedrückt und durch das Einführen des Rastelements des Verschlusselements auseinandergespreizt werden können. Zum Anderen stellt ein solches Federelement eine Verbindung dergestalt her, dass die Spreizelemente zwar verbunden sind, aber diese Verbindung das Einführen des Rastelements nicht behindert.

Eine nicht unter den Wortlaut der Ansprüche fallende Ausführungsform sieht einzelne Eingriffsöffnungen vor. In diesem Fall kann auf das Federelement verzichtet werden, da zwischen den mehreren Eingriffsöffnungen dann Zwischenstege verbleiben, die ein Auseinanderfallen des Grundelements verhindern.

In konkreter Ausgestaltung kann vorgesehen sein, dass das Federelement aus wenigstens einem zwischen den Spreizflanken angeordneten, federelastischen Materialwinkel gebildet ist. Hierdurch ist es möglich das Federelement direkt mit zu extrudieren, sowie durch die Winkelform den Aufnahmeraum für das Rastelement freizuhalten. Indem die Winkelspitze des Materialwinkels von der Eingriffsöffnung wegweist, wird der von dem Materialwinkel eingenommene Raum nicht von dem Aufnahmeraum weggenommen, wenn der Materialwinkel zusammengedrückt wird. Eine sichere Verbindung der beiden Teile des Grundelements geht vielmehr mit einer Federwirkung und dem sicheren Freihalten des Aufnahmeraums einher.

Weiter kann vorgesehen sein, dass das Rastelement von dem Verschlusselement zumindest im Wesentlichen senkrecht aufragt und an einem von dem Verschlusselement abgewandten Ende eine Rastkante aufweist. Die senkrechte Anordnung erlaubt eine möglichst kurze Verbindung, die Verwendung einer Rastkante sichert die Verbindung mit dem Grundelement. Vorzugsweise kann eine der Spreizflanken direkt an einer Kante der Eingriffsöffnung angesetzt sein, während die andere Spreizflanke so weit von der anderen Kante der Eingriffsöffnung entfernt ist, dass dort eine Hinterschneidung zur Aufnahme der Rastkante gebildet ist.

Ergänzend kann vorgesehen sein, dass die Spreizflanken endständige Rastelemente zur Verrastung in einer hinterschnittenen Nut des Nutprofils aufweisen. So können auch die Spreizflanken sich an den Hinterschneidungen der Nut in dem Nutprofil verrasten und gegen ein Herausziehen sichern. Aufgrund der Federwirkung des Federelements und der Spreizwirkung des Rastelements des Verschlusselements können nach einem Herausziehen des Rastelements aus der Eingriffsöffnung dennoch die Spreizelemente wieder zusammengedrückt und aus der Nut herausgezogen werden.

Bevorzugtermaßen kann die erste Anlageflanke einen Winkel von höchstens 90° mit dem Grundelement einschließen. Die erste Anlageflanke ist nach außen sichtbar und überdeckt die Kante der einzufassenden Scheibe. Als solche ist es sinnvoll, wenn diese im Wesentlichen fluchtend mit den Sichtseiten des Nutprofils und damit senkrecht zu dem Grundelement verläuft. Um eine Federwirkung gegenüber der Glasscheibe zu erzeugen, kann der Winkel jedoch auch etwas kleiner als 90°, vorzugsweise zwischen 85° und 90°, gewählt werden. Im Rahmen von Toleranzen kann der Winkel auch größer als 90° sein, jedoch wird dies nicht angestrebt, um unschöne Kanten, in denen sich auch Schmutz ansammeln kann, zu vermeiden.

In besonders bevorzugter Ausgestaltung kann die Gelenkverbindung als Filmscharnier ausgestaltet sein. Hierdurch wird vermieden, dass die Gelenkverbindung als separates Teil aufwändig hergestellt werden muss, sie kann vielmehr während eines Extrusionsvorgangs mit den angrenzenden Elementen dadurch hergestellt werden, dass zwischen diesen eine sehr dünne Materialbrücke vorgesehen wird.

Weiter kann vorgesehen sein, dass dem Verschlusselement zwischen der Gelenkverbindung und der Anpresslippe eine zweite Anlageflanke gebildet ist, welche mit dem Verschlusselement einen Winkel einschließt, wobei die zweite Anlageflanke in einem an das Grundelement angelegten Zustand des Verschlusselements von dem Grundelement wegweist. Eine solche zweite Anlageflanke begrenzt eine maximale Dicke der Scheibe, wobei im Allgemeinen vorgesehen ist, dass die Scheibe dünner sein sollte als der Abstand zwischen den beiden Anlageflanken, zumal die Anpresslippe die Scheibe von der zweiten Anlageflanke in Richtung der ersten Anlageflanke drückt.

Zudem erscheint es sinnvoll, wenn das Grundelement und das Verschlusselement, zusammen mit der dazwischenliegenden Gelenkverbindung aus Polypropylen hergestellt sind. Polypropylen eignet sich als robustes, aber günstiges Material besonders für solche Profilleisten, insbesondere mit Funktionen wie federnden Elementen und Filmscharnieren.

So kann es insbesondere sinnvoll sein, wenn die Anpresslippe aus Gummi hergestellt und gemeinsam mit Grundelement, Verschlusselement und Gelenkverbindung koextrudiert ist.

Die vorstehend beschriebene Erfindung wird im Folgenden anhand eines Ausführungsbeispiels näher erläutert.

Es zeigen
- Figur 1: ein erfindungsgemäßes Scheibeneinfassprofil in geöffnetem Zustand in einer Querschnittsdarstellung,
- Figur 2: das Scheibeneinfassprofil gemäß Figur 1 in einem halbgeschlossenen Zustand,
- Figur 3: das Scheibeneinfassprofil gemäß Figur 1 mit einer eingefassten Scheibe in einem geschlossenen Zustand, sowie
- Figur 4: ein geschlossenes Scheibeneinfassprofil mit einer eingefassten Scheibe, welches an einem Nutprofil befestigt ist.

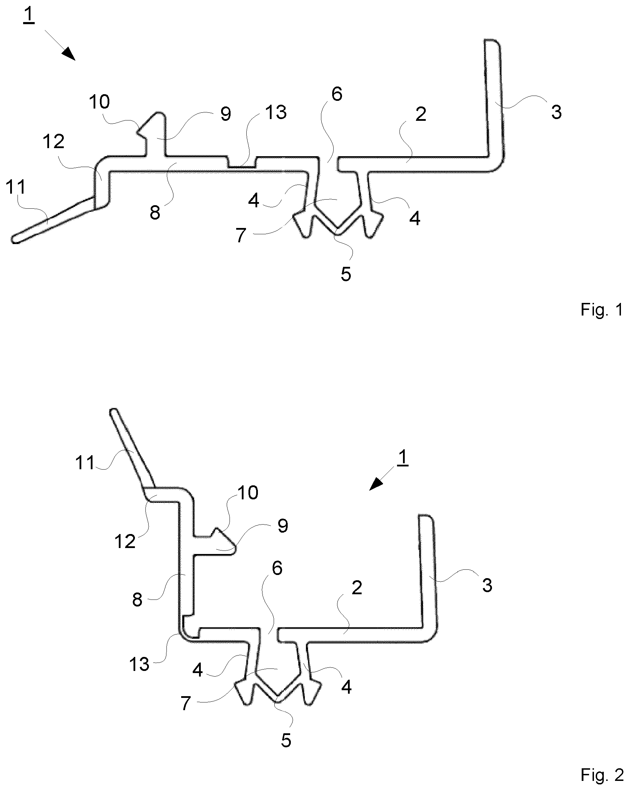

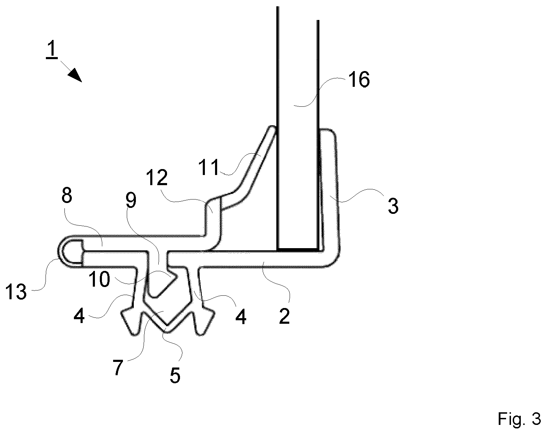

Figur 1 zeigt ein erfindungsgemäßes Scheibeneinfassprofil 1, welches im Wesentlichen aus einem Grundelement 2, einem Verschlusselement 8 und einer dazwischenliegenden Gelenkverbindung 13 in Form eines Filmscharniers besteht. Wie sich aus der Folge der Figuren 1, 2 und 3 ergibt, kann das Verschlusselement 8 um die Gelenkverbindung 13 herum bis in Anlage gegen das Grundelement 2 herumgeschwenkt werden, so dass, wie in Figur 3 gezeigt, eine Scheibe 16 zwischen einer ersten Anlageflanke 3 des Grundelements 2 und einer zweiten Anlageflanke 12 des Verschlusselements 8 aufgenommen wird.

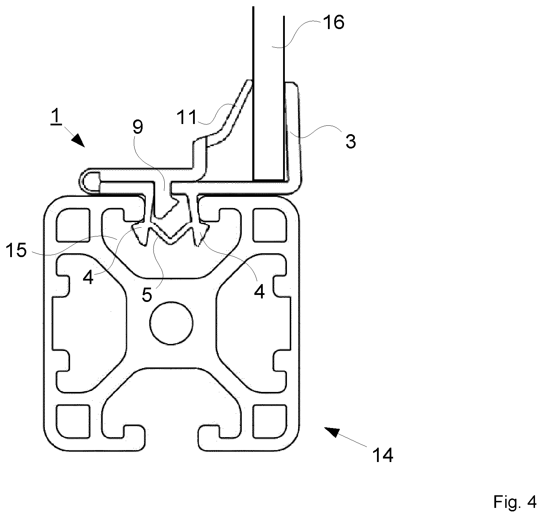

Wie in Figur 4 dargestellt, kann das erfindungsgemäße Scheibeneinfassprofil 1 mit einem Nutprofil 14 verbunden sein und dazu dienen, die besagte Scheibe 16 mit dem Nutprofil 14 zu verbinden. Das Nutprofil 14 hat im vorliegenden Fall zwei einander gegenüberliegende Nuten 15, von denen eine in Figur 4 mit dem erfindungsgemäßen Scheibeneinfassprofil 1 belegt wird. An seinem Grundelement 2 weist das Scheibeneinfassprofil 1 hierfür zwei Spreizflanken 4 auf, die jeweils mit dem Grundelement 2 einen spitzen Winkel einschließen und voneinander weggeneigt sind. An ihren äußeren Enden weisen die Spreizflanken 4 Rastelemente auf, so dass die Spreizflanken 4 nach ihrem Einbringen in die Nut 15 und ihrer Aufspreizung in einer Hinterschneidung der Nut 15 gehalten sind.

Das Grundelement 2 bildet hierbei eine Eingriffsöffnung 6 aus, durch welche das Grundelement 2 in zwei Teile zerfällt, von denen jedes eine der Spreizflanken 4 umfasst. Die Spreizflanken 4 sind jedoch über ein Federelement 5 in Form eines federnden Materialwinkels miteinander verbunden und bilden so zusammen mit dem Grundelement 2 einen Aufnahmeraum 7 aus, in welchen ein von dem Verschlusselement 8 gebildetes Rastelement 9 eingeschoben werden kann.

Solange das Scheibeneinfassprofil 1, wie in Figur 1 gezeigt, offen ist, können die Teile des Grundelements 2 und damit die beiden Spreizflanken 4 sich aufeinander zu und voneinander weg bewegen, soweit es das Federelement 5 zulässt. Dies erleichtert das Einführen in die Nut 15 des Nutprofils 14. Um dann gleichzeitig das Scheibeneinfassprofil 1 in der Nut 15 zu fixieren und die in Figur 3 eingelegte Scheibe 16 einzufassen, wird das Verschlusselement 8 um die Gelenkverbindung 13 herum, wie in Figur 2 dargestellt, geschwenkt. Das an dem Verschlusselement 8 gebildete Rastelement 9 wird hierbei auf die Eingriffsöffnung 6 zubewegt und in diese eingeführt, wobei es die Teile des Grundelements 2 und die Spreizflanken 4 auseinanderdrückt und in der Nut 15 des Nutprofils 14 festhakt. Die zwischendurch auftretenden Bewegungen nimmt das Federelement 5 auf. Eine Rastkante 10 am freien Ende des Rastelements 9 verhakt sich nach dem Einführen, wie in Figur 3 gezeigt, hinter einer freigehaltenen Kante der Eingriffsöffnung 6, da die der Rastkante 10 zugewandte Spreizflanke 4, im Bild rechts, einen Abstand von der Eingriffsöffnung 6 einhält, um zwischen sich und der Eingriffsöffnung 6 eine Hinterschneidung zu schaffen, die mit der Rastkante 10 des Rastelements 9 zusammenwirkt.

Dabei gerät das Verschlusselement 8 in direkt Anlage mit dem Grundelement 2 und die zweite Anlageflanke 12 wird parallel zu der Scheibe 16 bzw. im Wesentlichen parallel zu der ersten Anlageflanke 3 positioniert. Die an der zweiten Anlageflanke 12 durch Koextrusion angeformte Anpresslippe drückt die Scheibe 16 gegen die erste Anlageflanke 3 und sorgt dabei für den sicheren Halt der Scheibe.

Vorstehend beschrieben ist somit ein leicht zu handhabendes und sowohl einfaches als auch kostengünstiges Scheibeneinfassprofil, mit dessen Hilfe Glasscheiben mit Nutprofilen unproblematisch und reversibel verbunden werden können.

### BEZUGSZEICHENLISTE

- 1: Scheibeneinfassprofil
- 2: Grundelement
- 3: erste Anlageflanke
- 4: Spreizflanken
- 5: Federelement
- 6: Eingriffsöffnung
- 7: Aufnahmeraum
- 8: Verschlusselement
- 9: Rastelement
- 10: Rastkante
- 11: Anpresslippe
- 12: zweite Anlageflanke
- 13: Gelenkverbindung
- 14: Nutprofil
- 15: Nut
- 16: Scheibe

## Patentansprüche

1. Scheibeneinfassprofil zur Verbindung mit einem Nutprofil (14), umfassend ein Grundelement (2) und ein an diesem über eine Gelenkverbindung (13) angeschlossenes Verschlusselement (8), wobei das Grundelement (2) eine endständige erste Anlageflanke (3) sowie zwei Spreizflanken (4) zum Eingreifen in eine Nut (15) des Nutprofils (14) aufweist, zwischen denen wenigstens eine Eingriffsöffnung (6) freigehalten ist, in welche wenigstens ein an dem Verschlusselement (8) angeformtes Rastelement (9) eingreifen kann, wenn das Verschlusselement (8) um die Gelenkverbindung (13) geschwenkt und in Anlage mit dem Grundelement (2) gebracht wird, wobei das Verschlusselement (8) an einem der Gelenkverbindung (13) gegenüberliegenden, freien Ende eine elastische Anpresslippe (11) zum Einfassen einer Scheibe (16) zwischen sich und der ersten Anlageflanke (3) aufweist,
**dadurch gekennzeichnet, dass** die Eingriffsöffnung (6) eine durchgehende Öffnung ausbildet und die Spreizflanken (4) über ein Federelement (5) miteinander verbunden sind, wobei das Federelement (5) mit den Spreizflanken (4) und dem Grundelement (2) einen Aufnahmeraum (7) zur Aufnahme des Rastelements (9) ausbildet.

2. Scheibeneinfassprofil gemäß Anspruch 1, **dadurch gekennzeichnet, dass** das Federelement (5) aus wenigstens einem zwischen den Spreizflanken (4) angeordneten, federelastischen Materialwinkel gebildet ist.

3. Scheibeneinfassprofil gemäß einem der Ansprüche 1 oder 2, **dadurch gekennzeichnet, dass** das Rastelement (9) von dem Verschlusselement (8) zumindest im Wesentlichen senkrecht aufragt und an einem von dem Verschlusselement (8) abgewandten Ende eine Rastkante (10) aufweist.

4. Scheibeneinfassprofil gemäß einem der vorhergehenden Ansprüche, **dadurch gekennzeichnet, dass** die Spreizflanken (4) endständige Rastelemente zur Verrastung in einer hinterschnittenen Nut (15) des Nutprofils (14) aufweisen.

5. Scheibeneinfassprofil gemäß einem der vorhergehenden Ansprüche, **dadurch gekennzeichnet, dass** die erste Anlageflanke (3) einen Winkel von höchstens 90° mit dem Grundelement (2) einschließt.

6. Scheibeneinfassprofil gemäß einem der vorhergehenden Ansprüche, **dadurch gekennzeichnet, dass** die Gelenkverbindung (13) als Filmscharnier ausgestaltet ist.

7. Scheibeneinfassprofil gemäß einem der vorhergehenden Ansprüche, **dadurch gekennzeichnet, dass** an dem Verschlusselement (8) zwischen der Gelenkverbindung (13) und der Anpresslippe (11) eine zweite Anlageflanke (12) gebildet ist, welche mit dem Verschlusselement (8) einen Winkel einschließt, wobei die zweite Anlageflanke (12) in einem an das Grundelement (2) angelegten Zustand des Verschlusselements (8) von dem Grundelement (2) wegweist.

8. Scheibeneinfassprofil gemäß einem der vorhergehenden Ansprüche, **dadurch gekennzeichnet, dass** das Grundelement (2) und das Verschlusselement (8), zusammen mit der dazwischenliegenden Gelenkverbindung (13) aus Polypropylen hergestellt sind.

9. Scheibeneinfassprofil gemäß Anspruch 8, **dadurch gekennzeichnet, dass** die Anpresslippe (11) aus Gummi hergestellt und gemeinsam mit Grundelement (2), Verschlusselement (8) und Gelenkverbindung (13) koextrudiert ist.

## Claims

1. Window frame profile for connection to a groove profile (14), comprising a base element (2) and a closure element (8) connected to it via a hinge connection (13), wherein the base element (2) has an end-mounted first abutment flank (3) and two spreader flanks (4) for engaging in a groove (15) of the groove profile (14), between which at least one engagement opening (6) is kept free, into which at least one latching element (9) formed on the closure element (8) can engage when the closure element (8) is pivoted about the hinge connection (13) and brought into contact with the base element (2), wherein the closure element (8) has an elastic pressure lip (11) at a free end opposite the hinge connection (13) for enclosing a washer (16) between itself and the first abutment flank (3), **characterized in that** the engagement opening (6) forms a continuous opening and the spreading flanks (4) are connected to each other via a spring element (5), wherein the spring element (5) forms a receiving space (7) for receiving the latching element (9) together with the spreading flanks (4) and the base element (2).

2. Window frame profile according to claim 1, **characterized in that** the spring element (5) is formed from at least one spring-elastic material angle arranged between the spreading flanks (4).

3. Window frame profile according to one of claims 1 or 2, **characterised in that** the locking element (9) protrudes at least substantially perpendicularly from the closure element (8) and has a locking edge (10) at an end facing away from the closure element (8).

4. Window frame profile according to one of the preceding claims, **characterised in that** the spreading flanks (4) have end-mounted locking elements for locking into an undercut groove (15) of the groove profile (14).

5. Window frame profile according to one of the preceding claims, **characterised in that** the first contact edge (3) forms an angle of at most 90° with the base element (2).

6. Window frame profile according to one of the preceding claims, **characterised in that** the hinge connection (13) is designed as a film hinge.

7. Window frame profile according to one of the preceding claims, **characterised in that** a second abutment flank (12) is formed on the closure element (8) between the hinge connection (13) and the contact lip (11), which forms an angle with the closure element (8), whereby the second contact flank (12) points away from the base element (2) when the closure element (8) is applied to the base element (2).

8. Window frame profile according to one of the preceding claims, **characterised in that** the base element (2) and the closure element (8), together with the hinge connection (13) between them, are made of polypropylene.

9. Window frame profile according to claim 8, **characterised in that** the pressure lip (11) is made of rubber and is co-extruded together with the base element (2), the closure element (8) and the hinge connection (13).

## Revendications

1. Profilé d'encadrement de vitre destiné à être assemblé avec un profilé rainuré (14), comprenant un élément de base (2) et un élément de fermeture (8) relié à celui-ci par une articulation (13), l'élément de base (2) présentant un premier flanc d'appui terminal (3) et deux flancs d'écartement (4) destinés à s'engager dans une rainure (15) du profilé rainuré (14), entre lesquels est maintenue libre au moins une ouverture d'engagement (6) dans laquelle peut s'engager au moins un élément d'encliquetage (9) formé sur l'élément de fermeture (8) lorsque l'élément de fermeture (8) est pivoté autour de la liaison articulée (13) et amené en appui contre l'élément de base (2), l'élément de fermeture (8) présentant, à une extrémité libre opposée à la liaison articulée (13), une lèvre de pression élastique (11) pour serrer une rondelle (16) entre elle et le premier flanc d'appui (3), **caractérisé en ce que** l'ouverture d'engagement (6) forme une ouverture continue et les flancs d'écartement (4) sont reliés entre eux par un élément ressort (5), l'élément ressort (5) formant avec les flancs d'écartement (4) et l'élément de base (2) un espace de réception (7) destiné à recevoir l'élément d'encliquetage (9).

2. Profilé d'encadrement de vitre selon la revendication 1, **caractérisé en ce que** l'élément élastique (5) est formé d'au moins une cornière en matériau élastique disposée entre les flancs d'écartement (4).

3. Profilé d'encadrement de vitre selon l'une des revendications 1 ou 2, **caractérisé en ce que** l'élément d'encliquetage (9) s'élève au moins essentiellement perpendiculairement à partir de l'élément de fermeture (8) et présente un bord d'encliquetage (10) à une extrémité opposée à l'élément de fermeture (8).

4. Profilé d'encadrement de vitre selon l'une des revendications précédentes, **caractérisé en ce que** les flancs d'écartement (4) présentent des éléments d'encliquetage terminaux pour l'encliquetage dans une rainure en contre-dépouille (15) du profilé rainuré (14).

5. Profilé d'encadrement de vitre selon l'une des revendications précédentes, **caractérisé en ce que** le premier flanc d'appui (3) forme un angle maximal de 90° avec l'élément de base (2).

6. Profilé d'encadrement de vitre selon l'une des revendications précédentes, **caractérisé en ce que** la liaison articulée (13) est conçue comme une charnière à film.

7. Profilé d'encadrement de vitre selon l'une des revendications précédentes, **caractérisé en ce qu'**un deuxième flanc d'appui (12) est formé entre l'élément de fermeture (8) et la lèvre de pression (11), lequel forme avec l'élément de fermeture (8) un angle tel qu'il est possible de monter le profilé d'encadrement de vit (8) entre la liaison articulée (13) et la lèvre de pression (11) forme un deuxième flanc d'appui (12) qui forme un angle avec l'élément de fermeture (8), le deuxième flanc d'appui (12) étant orienté à l'opposé de l'élément de base (2) lorsque l'élément de fermeture (8) est appliqué contre l'élément de base (2).

8. Profilé d'encadrement de vitre selon l'une des revendications précédentes, **caractérisé en ce que** l'élément de base (2) et l'élément de fermeture (8), ainsi que la liaison articulée (13) située entre eux, sont fabriqués en polypropylène.

9. Profilé d'encadrement de vitre selon la revendication 8, **caractérisé en ce que** la lèvre de pression (11) est fabriquée en caoutchouc et est coextrudée avec l'élément de base (2), l'élément de fermeture (8) et la liaison articulée (13).
